(19) Europäisches Patentamt
European Patent Office
Office européen des brevets

(11) **EP 3 926 162 B1**

(12) **EUROPÄISCHE PATENTSCHRIFT**

(45) Veröffentlichungstag und Bekanntmachung des Hinweises auf die Patenterteilung:
**24.04.2024  Patentblatt 2024/17**

(21) Anmeldenummer: **21177034.2**

(22) Anmeldetag: **01.06.2021**

(51) Internationale Patentklassifikation (IPC):
**F03D 7/02** *(2006.01)*    **F03D 7/04** *(2006.01)*

(52) Gemeinsame Patentklassifikation (CPC):
**F03D 7/0224; F03D 7/048;** F05B 2270/204;
Y02E 10/72

(54) **VERFAHREN ZUM BETRIEB EINER WINDENERGIEANLAGE, STEUERUNGSVORRICHTUNG ZUM BETRIEB EINER WINDENERGIEANLAGE UND WINDPARK**

METHOD FOR OPERATING A WIND TURBINE, CONTROL DEVICE FOR OPERATING A WIND TURBINE AND WIND FARM

PROCÉDÉ DE FONCTIONNEMENT D'UNE ÉOLIENNE, DISPOSITIF DE COMMANDE DESTINÉ AU FONCTIONNEMENT D'UN ÉOLIENNE ET PARC ÉOLIEN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2020  DE 102020116072**

(43) Veröffentlichungstag der Anmeldung:
**22.12.2021  Patentblatt 2021/51**

(73) Patentinhaber: **Wobben Properties GmbH**
**26607 Aurich (DE)**

(72) Erfinder:
• **Bott, Stefanie**
**28201 Bremen (DE)**
• **Brück, Arjun**
**28199 Bremen (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
EP-A1- 3 587 805    EP-A1- 3 754 179
EP-A2- 1 790 851    EP-A2- 2 063 108
WO-A1-2017/207598

• ANNONI JENNIFER ET AL: "Evaluating wake models for wind farm control", 2015 AMERICAN CONTROL CONFERENCE (ACC), IEEE, 4. Juni 2014 (2014-06-04), Seiten 2517-2523, XP032621406, ISSN: 0743-1619, DOI: 10.1109/ACC.2014.6858970 [gefunden am 2014-07-17]

**Beschreibung**

Die Erfindung betrifft ein Verfahren zum Betrieb einer Windenergieanlage, in deren Nachlauf sich bei wenigstens einer Nachlaufwindrichtung eine zweite Windenergieanlage befindet, eine Steuerungsvorrichtung zum Betrieb einer Windenergieanlage und einen Windpark mit einer ersten Windenergieanlage und einer zweiten Windenergieanlage.

Windenergieanlagen sind grundsätzlich bekannt, sie erzeugen elektrische Leistung aus Wind. Windenergieanlagen betreffen in der Regel Horizontalachsen-Windenergieanlagen, bei denen die Rotorachse im Wesentlichen horizontal ausgerichtet ist und die Rotorblätter eine im Wesentlichen senkrechte Rotorfläche überstreichen. Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist. Der Rotor umfasst in der Regel drei Rotorblätter. Die Rotorblätter sind schlanke Bauteile, die häufig aus faserverstärktem Kunststoff hergestellt sind.

Windenergieanlagen werden inzwischen üblicherweise nicht singulär aufgestellt, sondern im Verbund mit mindestens einer weiteren Windenergieanlage, insbesondere mit einer Vielzahl von Windenergieanlagen. Eine solche Ansammlung von Windenergieanlagen wird auch als Windpark bezeichnet. Windenergieanlagen eines Windparks können sich gegenseitig beeinflussen. Dies ist beispielsweise der Fall, wenn eine Windenergieanlage von einer anderen Windenergieanlage aerodynamisch abgeschattet wird.

Eine aerodynamische Abschattung erfolgt dann, wenn sich die in Lee befindliche Windenergieanlage im Windschatten der in Luv befindlichen Windenergieanlage befindet. Ein solcher Windschatten wird auch als Wake oder Nachlauf bezeichnet. Eine im Nachlauf befindliche Windenergieanlage stellt üblicherweise nicht die für eine bestimmte Windgeschwindigkeit übliche Leistung bereit. Häufig kommt es auch vor, dass die im Nachlauf befindliche Windenergieanlage nicht ihre Nennleistung erreicht, oder erreichen kann oder diese bezogen auf eine ungestörte Windgeschwindigkeit erst später erreicht.

Die Leistung des Windparks ist daher unter Berücksichtigung der individuellen Leistung der Windenergieanlagen, wobei Nachlaufeffekte zu berücksichtigen sind, zu bestimmen. Aufgrund dessen ist es in der Regel nicht das Ziel, die einzelnen Windenergieanlagen singulär hinsichtlich ihrer Leistung zu optimieren, sondern den Windpark als solches zu optimieren. Das zugrundeliegende Optimierungsproblem soll also primär die Leistung des Windparks maximieren.

Bei diesem Maximierungsproblem sind eine Reihe von Randbedingungen zu berücksichtigen, wobei insbesondere die gesteigerten Lasten durch erhöhte Turbulenz von Windenergieanlagen im Nachlauf einer anderen Windenergieanlage zu berücksichtigen sind. Insbesondere sind die auftretenden Lasten an den Windenergieanlagen derart zu berücksichtigen, dass diese die maximalen Auslegungslasten nicht überschreiten.

Die nachveröffentlichte EP 3 754 179 A1 betrifft ein Verfahren zum Betreiben einer Windkraftanlage, wobei die Windkraftanlage einen mit variabler Rotordrehzahl betreibbaren Rotor umfasst, wobei der Rotor Rotorblätter mit einstellbaren Anstellwinkeln aufweist und die einstellbaren Anstellwinkel durch einen gemeinsamen Anstellwinkel repräsentiert sind, wobei die Windkraftanlage elektrischen Strom aus Wind erzeugt und der Wind in einem Teillastfall, wenn der Wind unterhalb der Nennwindgeschwindigkeit liegt, abhängig von der Rotordrehzahl und abhängig vom gemeinsamen Pitchwinkel einen auf den Rotor wirkenden Rotorschub bewirkt, wobei die Windenergieanlage mittels einer Rotordrehzahlkurve gesteuert wird, die die Rotordrehzahl für jeden Betriebspunkt der Windenergieanlage definiert, wobei in einem normalen Betriebsmodus, wenn der Betrieb der Windenergieanlage nicht gedrosselt wird, eine normale Rotordrehzahlkurve in Kombination mit einem normalen gemeinsamen Anstellwinkel verwendet wird, und wobei in einem gedrosselten Betriebsmodus, wenn der Rotorschub begrenzt werden soll, eine gedrosselte Rotordrehzahlkurve, die sich von der normalen Rotordrehzahlkurve unterscheidet, in Kombination mit einem gedrosselten gemeinsamen Anstellwinkel, der sich vom normalen gemeinsamen Anstellwinkel unterscheidet, verwendet wird, um den Rotorschub zu reduzieren.

Es ist daher eine Aufgabe der vorliegenden Erfindung, ein Verfahren zum Betrieb einer Windenergieanlage, eine Steuerungsvorrichtung zum Betrieb einer Windenergieanlage und einen Windpark mit einer ersten Windenergieanlage und einer zweiten Windenergieanlage bereitzustellen, die einen oder mehrere der genannten Nachteile vermindern oder beseitigen. Es ist insbesondere eine Aufgabe der Erfindung, eine Lösung bereitzustellen, die die elektrische Leistung eines Windparks verbessert.

Gemäß einem ersten Aspekt wird die eingangs genannte Aufgabe gelöst durch ein Verfahren zum Betrieb einer ersten Windenergieanlage mit einem Rotor, der ein mit einem Pitchwinkel einstellbares Rotorblatt aufweist, die eine elektrische Leistung erzeugt und in deren Nachlauf sich bei wenigstens einer Nachlaufwindrichtung eine zweite Windenergieanlage befindet, umfassend den Schritt: Betreiben der ersten Windenergieanlage in einem im Wesentlichen nachlauffreien Normalbetrieb mit einer ersten Pitchkennlinie und Betreiben der ersten Windenergieanlage in einem nachlaufbelasteten Nachlaufbetrieb mit einer zweiten Pitchkennlinie, wobei die erste Pitchkennlinie einen ersten Verlauf des Pitchwinkels und die zweite Pitchkennlinie einen zweiten Verlauf des Pitchwinkels in Abhängigkeit der elektrischen Leistung repräsentiert, wobei der Pitchwinkel der zweiten Pitchkennlinie für wenigstens einen Bereich der elektrischen Leistung größer ist als der Pitchwinkel der ersten Pitchkennlinie. Die erste Pitchkennlinie und die zweite Pitchkennlinie stimmen bis zu einem ersten Leistungsschwellwert der elektrischen Leistung im Wesentlichen überein, und für eine den ersten Leistungsschwellwert überschreitende elektrische Leistung ist der Pitchwinkel der zweiten Pitchkennlinie größer als der Pitchwinkel der ersten Pitchkennlinie.

Es ist also eine besondere Erkenntnis der vorliegenden Anmeldung, dass nicht die sich im Nachlauf befindliche Windenergieanlage, sondern gerade die den Nachlauf verursachende Windenergieanlage abweichend von bisherigen Strategien betrieben wird. Das Verfahren ermöglicht daher eine Maximierung der Jahresenergieproduktion der zweiten Windenergieanlage insbesondre unter Einhaltung von Nebenbedingungen wie der Einhaltung maximaler Schubbeiwerte oder nachlaufbeeinflusster Turbulenzintensitäten.

Die zweite Windenergieanlage befindet sich im Nachlauf der ersten Windenergieanlage, wenn der Wind aus der wenigstens einen Nachlaufwindrichtung weht. Vorzugsweise ist die Nachlaufwindrichtung als ein Windrichtungsbereich definiert, beispielsweise ein Windrichtungsbereich der etwa 15 Grad einschließt, wobei dieser abhängig von dem verwendeten Modell sein kann. Der Nachlauf ist insbesondere dadurch charakterisiert, dass die zweite Windenergieanlage aerodynamisch durch die erste Windenergieanlage beeinflusst, insbesondere abgeschattet, wird.

Die zweite Windenergieanlage befindet sich also im Nachlauf der ersten Windenergieanlage, wenn der Wind aus der wenigstens einen Nachlaufwindrichtung weht. Wenn sich die zweite Windenergieanlage im Nachlauf der ersten Windenergieanlage befindet, werden die aerodynamischen Bedingungen an der zweiten Windenergieanlage verändert, im Vergleich zu einer nicht durch die erste Windenergieanlage beeinflussten Strömungssituation. Wenn sich die zweite Windenergieanlage im Wesentlichen nicht im Nachlauf der ersten Windenergieanlage befindet, wird dieser Zustand als nachlauffrei bezeichnet. Wenn sich die zweite Windenergieanlage im Nachlauf der ersten Windenergieanlage befindet, wird dieser Zustand als nachlaufbelastet bezeichnet.

Die erste Windenergieanlage wird in dem im Wesentlichen nachlauffreien Normalbetrieb mit einer ersten Pitchkennlinie betrieben. Wenn die zweite Windenergieanlage nachlaufbelastet ist, also sich im Nachlauf der ersten Windenergieanlage befindet, wird die erste Windenergieanlage im Nachlaufbetrieb mit einer zweiten Pitchkennlinie betrieben.

Die erste Pitchkennlinie repräsentiert einen ersten Verlauf des Pitchwinkels in Abhängigkeit von der elektrischen Leistung. Vorzugsweise umfasst die Pitchkennlinie für jeden Wert der elektrischen Leistung einen definierten Pitchwinkel. Analog hierzu repräsentiert die zweite Pitchkennlinie einen zweiten Verlauf des Pitchwinkels in Abhängigkeit von der elektrischen Leistung. Die zweite Pitchkennlinie ordnet somit analog zur ersten Pitchkennlinie jeder elektrischen Leistung einen definierten Pitchwinkel zu. Diese Zuordnung ist vorzugsweise für eine definierte Spannweite der elektrischen Leistung festgelegt, insbesondere für jede elektrische Leistung, die sich im Betrieb der Windenergieanlage einstellen kann, beispielsweise zwischen 0 kW und der Nennleistung.

Die erste Pitchkennlinie und die zweite Pitchkennlinie stimmen demnach bis zu einem ersten Leistungsschwellwert der elektrischen Leistung im Wesentlichen überein. Übereinstimmen bedeutet insbesondere, dass für eine im Wesentlichen beliebige elektrische Leistung unter dem Leistungsschwellwert der Pitchwinkel der ersten Pitchkennlinie und der Pitchwinkel der zweiten Pitchkennlinie im Wesentlichen gleich ist. In anderen Ausführungen können die erste Pitchkennlinie und die zweite Pitchkennlinie auch in sämtlichen Bereichen voneinander unterschiedlich sein.

Im Wesentlichen übereinstimmend bedeutet insbesondere, dass für eine definierte elektrische Leistung der Pitchwinkel weniger als 30 %, weniger als 20 % oder weniger als 10 % der ersten und zweiten Pitchkennlinie voneinander abweicht. Dies steht im Gegensatz zur derzeit bei einigen Windparks eingesetzten Praxis, die üblicherweise vorsieht, dass der Pitchwinkel im nachlaufbelasteten Nachlaufbetrieb pauschal deutlich erhöht wird, um die turbulenzinduzierten Lasten zu reduzieren. Beispielsweise wird der Pitchwinkel pauschal auf 5°, 6° oder 6,5° gesetzt und/oder um mehr als 2°, 3° oder 4° erhöht. Hierdurch wird jedoch im Bereich unter dem ersten Leistungsschwellwert die Leistung der Windenergieanlage und somit die Leistung des Windparks unnötig verringert.

Weiter ist demnach vorzugsweise dann, wenn die elektrische Leistung der ersten Windenergieanlage den ersten Leistungsschwellwert überschreitet, vorgesehen, dass der Pitchwinkel der zweiten Pitchkennlinie größer ist als der Pitchwinkel der ersten Pitchkennlinie. Das bedeutet, dass für eine bestimmte elektrische Leistung, die größer ist als der erste Leistungsschwellwert, der Pitchwinkel im nachlaufbelasteten Nachlaufbetrieb größer ist als der einzustellende Pitchwinkel im nachlauffreien Normalbetrieb. Wenn die zweite Windenergieanlage beispielsweise im Wesentlichen nicht nachlaufbelastet ist, wird die erste Windenergieanlage mit der ersten Pitchkennlinie gefahren. Hierbei kann beispielsweise bei einer Leistung von 1500 kW ein Pitchwinkel von 2° eingestellt werden, wobei dies natürlich von der Nennleistung der Windenergieanlage und weiteren Auslegungsparametern abhängt.

Wenn sich die zweite Windenergieanlage jedoch im Nachlauf der ersten Windenergieanlage befindet, wird die erste Windenergieanlage mit der zweiten Pitchkennlinie betrieben. In diesem Fall würde, für die gleiche exemplarische Windenergieanlage, beispielsweise bei einer Leistung von 1500 kW ein Pitchwinkel von ca. 4° eingestellt werden. Hieraus wird ersichtlich, dass bei einer elektrischen Leistung, die den ersten Leistungsschwellwert überschreitet, der Pitchwinkel der zweiten Pitchkennlinie größer ist als der Pitchwinkel der ersten Pitchkennlinie.

Hierdurch wird berücksichtigt, dass ab einer bestimmten elektrischen Leistung und/oder ab einer bestimmten Windgeschwindigkeit, die durch in Luv befindliche erste Windenergieanlage induzierte Turbulenz vor der zweiten Windenergieanlage derart stark ist, dass bei Regelbetrieb der ersten Windenergieanlage eine Abregelung der zweiten Windenergieanlage erforderlich wäre. Dies wird durch die zweite Pitchkennlinie berücksichtigt. In einem Bereich geringer elektrischer Leistung und/oder geringer Windgeschwindigkeit ist eine solche Abregelung in der Regel nicht erforderlich, da die an der zweiten Windenergieanlage auftretende Turbulenz eine maximal zulässige Auslegungsturbulenz üblicherweise nicht überschreitet.

Eine bevorzugte Ausführungsvariante des Verfahrens sieht vor, dass für eine elektrische Leistung, die kleiner ist als der erste Leistungsschwellwert, der Pitchwinkel der ersten Pitchkennlinie und der Pitchwinkel der zweiten Pitchkennlinie im Wesentlichen gleich sind, und/oder wobei der Verlauf der ersten Pitchkennlinie und/oder der Verlauf der zweiten Pitchkennlinie bis zum Überschreiten des ersten Leistungsschwellwertes im Wesentlichen keine Steigung aufweisen.

Beispielsweise definiert die erste Pitchkennlinie im Bereich unter dem ersten Leistungsschwellwert einen Pitchwinkel von 2° für eine elektrische Leistung von 500 kW. In diesem Fall würde die zweite Pitchkennlinie im Bereich unter dem ersten Leistungsschwellwert für eine elektrische Leistung von 500 kW ebenfalls einen Pitchwinkel von 2° aufweisen.

Ein Verlauf der ersten Pitchkennlinie ohne eine Steigerung zeichnet sich insbesondere dadurch aus, dass auch bei steigender elektrischer Leistung der Pitchwinkel im Wesentlichen konstant bleibt. Beispielsweise kann der Pitchwinkel 2° betragen. Das Gleiche gilt im Wesentlichen für die zweite Pitchkennlinie.

Gemäß einer weiteren bevorzugten Ausführungsvariante des Verfahrens ist vorgesehen, dass die erste und/oder die zweite Windenergieanlage einen windgeschwindigkeitsabhängigen maximal zulässigen Schubbeiwert aufweist, wobei der Pitchwinkel der zweiten Pitchkennlinie einen derartigen Verlauf aufweist, dass ein an der Windenergieanlage auftretender Schubbeiwert den maximal zulässigen Schubbeiwert im Wesentlichen nicht überschreitet. Dieser maximale Schubbeiwert kann beispielsweise aus einer nachlaufbelasteten Turbulenzintensität entstammen. Anders ausgedrückt, die zweite Pitchkennlinie weist einen Verlauf auf, dass der Schubbeiwert, den die in Luv stehende Windenergieanlage ausübt, nicht über einem maximalen Schubbeiwert liegt, der aus einer Begrenzung der Turbulenzintensität einer in Lee stehenden und damit nachlaufbelasteten Windenergieanlge stammt.

Darüber hinaus ist es bevorzugt, dass die zweite Windenergieanlage eine windgeschwindigkeitsabhängige maximal zulässige Turbulenzintensität aufweist, wobei der Pitchwinkel der zweiten Pitchkennlinie einen derartigen Verlauf aufweist, dass eine an der Windenergieanlage auftretende Turbulenzintensität die maximal zulässige Turbulenzintensität im Wesentlichen nicht überschreitet.

Die maximal zulässige Turbulenzintensität $TI_{max}$ ist in der IEC Norm 61400-1 festgelegt:

$$TI_{max} = TI_{WK} * \frac{0{,}75 * v + 5{,}6}{v}.$$

$TI_{WK}$ ist abhängig von der Windklasse, die in die Klassen A, B, und C eingeteilt ist. $TI_{WK}$ kann beispielsweise 0,12, 0,14 und 0,16 betragen. Für eine nachlaufbelastete Windenergieanlage ist die Geschwindigkeit v durch Nachlaufmodelle zu berechnen, beispielsweise solche von Jensen, Qian, Porte-Agel. Diese Nachlaufmodelle erfordern in der Regel den Schubbeiwert der in Luv befindlichen Anlage, der beispielsweise mithilfe einer Blade-Element-Momentum-Theory (BEM) berechnet werden kann. Daher wird üblicherweise als Randbedingung zur Maximierung der elektrischen Leistung des Windparks aufgestellt, dass die an der nachlaufbelasteten Windenergieanlage anliegende Turbulenz kleiner ist als eine maximal zulässige Turbulenz $TI_{max}$.

Der Erfindung liegt unter anderem die Erkenntnis zugrunde, dass diese turbulenzbezogene Nebenbedingung äquivalent dazu ist, dass der Schubbeiwert einer nachlaufbelasteten Windenergieanlage geringer ist, als ein maximal zulässiger Schubbeiwert. In Abhängigkeit des Modells sind weitere Variablen für die Bewertung heranzuziehen, beispielsweise kann die Schnelllaufzahl in der Ungleichung enthalten sein.

Eine bevorzugte Fortbildung des Verfahrens zeichnet sich dadurch aus, dass für eine den ersten Leistungsschwellwert überschreitende elektrische Leistung, die kleiner ist als ein zweiter Leistungsschwellwert, der Pitchwinkel der ersten Pitchkennlinie im Wesentlichen konstant ist und der Pitchwinkel der zweiten Pitchkennlinie ansteigt, vorzugsweise stetig ansteigt, besonders bevorzugt linear ansteigt, wobei auch andere Verläufe möglich sind.

Zwischen dem ersten Leistungsschwellwert und dem zweiten Leistungsschwellwert ist somit unabhängig von der elektrischen Leistung der Pitchwinkel der ersten Pitchkennlinie im Wesentlichen konstant. Zwischen dem ersten Leistungsschwellwert und dem zweiten Leistungsschwellwert steigt der Pitchwinkel der zweiten Pitchkennlinie mit zunehmender elektrischer Leistung an.

Eine weitere bevorzugte Fortbildung des Verfahrens zeichnet sich dadurch aus, dass für eine den zweiten Leistungsschwellwert überschreitende elektrische Leistung die erste Pitchkennlinie eine positive Steigung aufweist, die vorzugsweise geringer ist als die Steigung der zweiten Pitchkennlinie.

In dieser bevorzugten Fortbildung weist die zweite Pitchkennlinie vorzugsweise einen ersten konstanten Abschnitt des Pitchwinkels unterhalb des ersten Leistungsschwellwerts, einen ansteigenden Abschnitt zwischen dem ersten Leistungsschwellwert und dem dritten Leistungsschwellwert und wieder einen konstanten Abschnitt ab dem dritten Leistungsschwellwert auf, wobei auch andere Verläufe vorteilhaft sind.

Ferner ist es bevorzugt, dass für eine einen dritten Leistungsschwellwert, der größer ist als der erste Leistungsschwellwert, überschreitende elektrische Leistung der Pitchwinkel der zweiten Pitchkennlinie im Wesentlichen konstant ist, und vorzugsweise einen Wert zwischen 4°-8°, insbesondere zwischen 6°-7°, annimmt.

Darüber hinaus ist es bevorzugt, dass der erste Leistungsschwellwert zwischen 70 % bis 80 % der Nennleistung der ersten Windenergieanlage beträgt.

Leistungsschwellwerte können insbesondere durch einen Knick in der Pitchwinkel-Leistungskennlinie erkannt werden.

Gemäß einem weiteren Aspekt wird die eingangs genannte Aufgabe gelöst durch eine Steuerungsvorrichtung zum Betrieb einer ersten Windenergieanlage mit einem Rotor, der ein mit einem Pitchwinkel einstellbares Rotorblatt aufweist, die eine elektrische Leistung erzeugt und in deren Nachlauf sich bei wenigstens einer Nachlaufwindrichtung eine zweite Windenergieanlage befindet, wobei die Steuerungsvorrichtung eingerichtet ist, die erste Windenergieanlage in einem im Wesentlichen nachlauffreien Normalbetrieb mit einer ersten Pitchkennlinie und in einem nachlaufbelasteten Nachlaufbetrieb mit einer zweiten Pitchkennlinie zu betreiben, wobei die erste Pitchkennlinie einen ersten Verlauf des Pitchwinkels und die zweite Pitchkennlinie einen zweiten Verlauf des Pitchwinkels in Abhängigkeit der elektrischen Leistung repräsentiert, wobei der Pitchwinkel der zweiten Pitchkennlinie für wenigstens einen Bereich der elektrischen Leistung größer ist als der Pitchwinkel der ersten Pitchkennlinie. Die erste Pitchkennlinie und die zweite Pitchkennlinie stimmen bis zu einem ersten Leistungsschwellwert der elektrischen Leistung im Wesentlichen überein, und für eine den ersten Leistungsschwellwert überschreitende elektrische Leistung ist der Pitchwinkel der zweiten Pitchkennlinie größer als der Pitchwinkel der ersten Pitchkennlinie.

Gemäß einem weiteren Aspekt wird die eingangs genannte Aufgabe gelöst durch einen Windpark mit einer ersten Windenergieanlage mit einem Rotor, der ein mit einem Pitchwinkel einstellbares Rotorblatt aufweist, die eine elektrische Leistung erzeugt und in deren Nachlauf sich bei wenigstens einer Nachlaufwindrichtung eine zweite Windenergieanlage befindet, wobei der Windpark zur Ausführung eines Verfahrens nach einem der im Vorherigen genannten Ausführungsvarianten ausgebildet ist, und/oder eine Steuerungsvorrichtung nach dem vorherigen Aspekt umfasst.

Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen des Verfahrens zum Betrieb einer ersten Windenergieanlage verwiesen.

Bevorzugte Ausführungsbeispiele werden exemplarisch anhand der beiliegenden Figuren erläutert. Es zeigen:

Figur 1 : eine schematische, dreidimensionale Ansicht einer beispielhaften Ausführungsform einer Windenergieanlage;

Figur 2: eine schematische Ansicht einer beispielhaften Ausführungsform eines Windparks;

Figur 3: schematische Verläufe von Pitchkennlinien;

Figur 4: schematische Verläufe von Schubbeiwerten;

Figur 5: schematische Verläufe von Schubbeiwerten; und

Figur 6: ein schematisches Verfahren.

In den Figuren sind gleiche oder im Wesentlichen funktionsgleiche bzw. -ähnliche Elemente mit den gleichen Bezugszeichen bezeichnet.

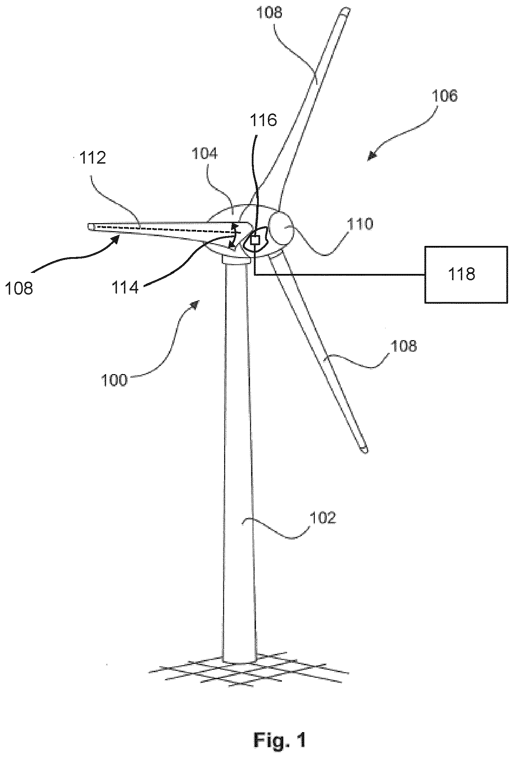

Figur 1 zeigt eine schematische Darstellung einer Windenergieanlage 100. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen.

Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel 114 der Rotorblätter 108 können durch Pitchantriebe 116 an den Rotorblattwurzeln der jeweiligen Rotorblätter 108 verändert werden.

Die Windenergieanlage 100 umfasst ferner eine Steuerungsvorrichtung 118, die eingerichtet ist, die Windenergieanlage 100 in einem im Wesentlichen nachlauffreien Normalbetrieb mit einer ersten Pitchkennlinie und in einem nachlaufbelasteten Nachlaufbetrieb mit einer zweiten Pitchkennlinie zu betreiben. Die erste Pitchkennlinie repräsentiert einen ersten Verlauf des Pitchwinkels und die zweite Pitchkennlinie repräsentiert einen zweiten Verlauf des Pitchwinkels in Abhängigkeit von der elektrischen Leistung. Die erste Pitchkennlinie und die zweite Pitchkennlinie stimmen bis zu einem ersten Leistungsschwellwert der elektrischen Leistung im Wesentlichen überein. Für eine den ersten Leistungsschwellwert überschreitende elektrische Leistung ist der Pitchwinkel der zweiten Pitchkennlinie größer als der Pitchwinkel der ersten Pitchkennlinie.

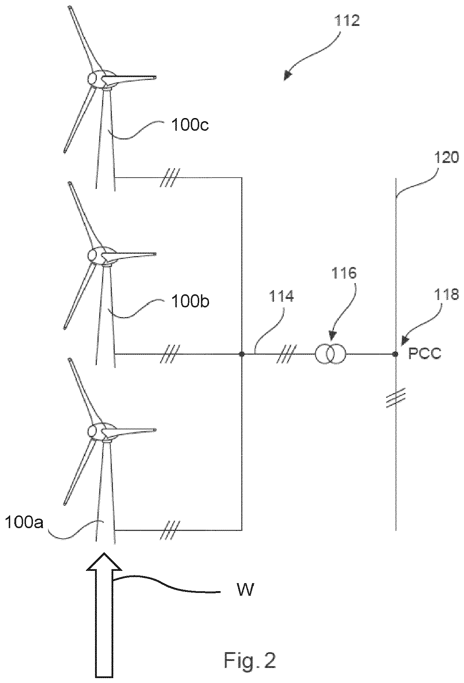

Figur 2 zeigt eine schematische Ansicht einer beispielhaften Ausführungsform eines Windparks 112. Figur 2 zeigt den Windpark 112 mit beispielhaft drei Windenergieanlagen 100a, 100b, 100c. Die drei Windenergieanlagen 100a, 100b, 100c stehen repräsentativ für im Grunde eine beliebige Anzahl von Windenergieanlagen des Windpark 112. Die Windenergieanlagen 100a, 100b, 100c stellen ihre elektrische Leistung, nämlich insbesondere den erzeugten Strom, über ein elektrisches Parknetz 114 bereit. Die jeweils erzeugten Ströme bzw. Leistungen der einzelnen Windenergieanlagen 100a, 100b, 100c werden aufaddiert und meist ist ein Transformator 116 vorgesehen, der die Spannung im Park hochtransformiert, um an dem Einspeisepunkt 118, der auch allgemein als PCC bezeichnet wird, in das Versorgungsnetz 120 einzuspeisen. Figur 2 ist lediglich eine vereinfachte Darstellung eines Windparks 112. Es kann beispielsweise das Parknetz 114 anders gestaltet sein, indem beispielsweise auch ein Transformator am Ausgang jeder Windenergieanlage 100a, 100b, 100c vorhanden ist.

Bei der eingezeichneten Windrichtung W befindet sich die Windenergieanlage 100b im Nachlauf der Windenergieanlage 100a. In diesem Fall ist die Windenergieanlage 100a in Luv der Windenergieanlage 100b angeordnet. Die Windenergieanlage 100a wird vorzugsweise jedenfalls zeitweise in einem nachlaufbelasteten Nachlaufbetrieb betrieben, bei dem sich in dem Nachlauf der Windenergieanlage 100a die Windenergieanlage 100b befindet. Dies bedeutet insbesondere, dass eine zweite Pitchkennlinie für diesen Betrieb vorgesehen ist. Die Windenergieanlage 100c befindet sich bei der Windrichtung W ebenfalls im Nachlauf der Windenergieanlagen 100a und 100b.

Ohne Beschränkung der Allgemeinheit wird die Windenergieanlage 100a nachfolgend auch als erste Windenergieanlage 100a und die Windenergieanlage 100b als zweite Windenergieanlage 100b bezeichnet.

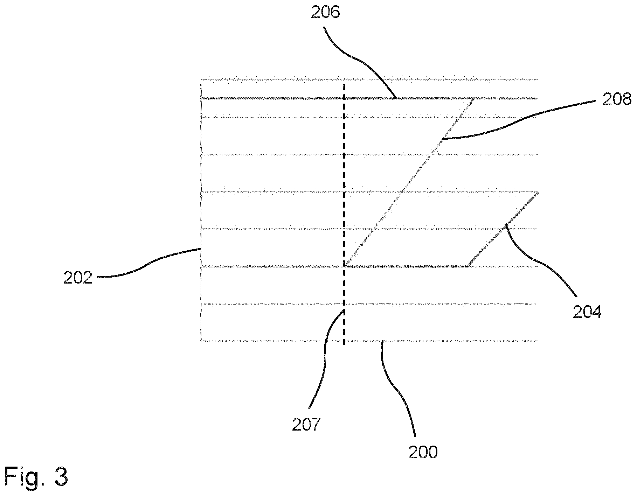

Figur 3 zeigt schematische Verläufe von Pitchkennlinien. Auf der Abszisse ist die elektrische Leistung 200 der vordersten, das heißt der nicht im Nachlauf befindlichen Windenergieanlage aufgetragen. Auf der Ordinate ist ein Pitchwinkel 202 der Windenergieanlage 100a aufgetragen. Die erste Pitchkennlinie wird für die Windenergieanlage 100a dann eingesetzt, wenn sich diese in einem nachlauffreien Normalbetrieb befindet, sich also in Abhängigkeit von der Windrichtung keine Windenergieanlage der Windenergieanlagen 100b, 100c im Nachlauf der Windenergieanlage 100a befindet. In dem nachlauffreien Normalbetrieb befindet sich die erste Windenergieanlage 100a also insbesondere dann, wenn der Wind aus einer Windrichtung weht, die verschieden ist von der in Figur 2 gezeigten Windrichtung W.

Ebenfalls ist in der Figur 3 eine konventionelle Pitchkennlinie 206 für einen nachlaufbelasteten Nachlaufbetrieb vorgesehen. Diese konventionelle Pitchkennlinie 206 sieht vor, dass, sobald sich eine Windenergieanlage im Nachlauf einer anderen Windenergieanlage befindet, der Pitchwinkel pauschal auf einen höheren Wert eingestellt wird, um die Schubbeiwerte zu reduzieren.

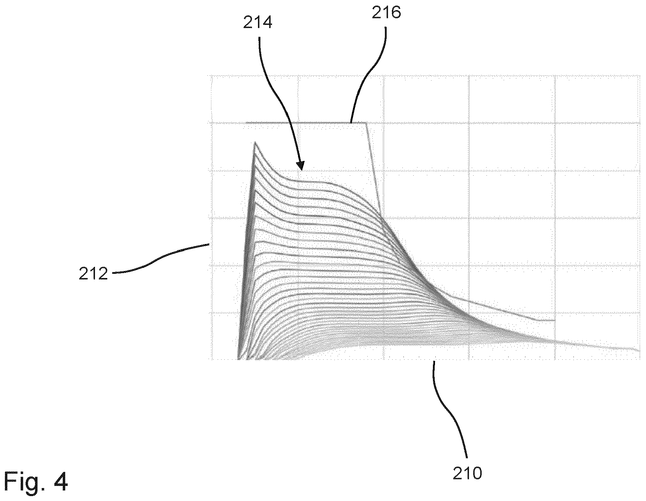

Dieser Effekt eines erhöhten Pitchwinkels und die daraus resultierende Reduktion des Schubbeiwertes, ist insbesondere der Figur 4 zu entnehmen. Figur 4 zeigt einen Verlauf einer ungestörten Windgeschwindigkeit 210 auf der Ordinate beispielsweise in Metern pro Sekunde über einem Schubbeiwert 212 auf der Abszisse für verschiedene Pitchwinkelverläufe aufgetragen Die in dem Diagramm der Fig. 4, das weiter unten genauer beschrieben wird, weiter unten dargestellten Pitchwinkelverläufe repräsentieren solche Verläufe für höhere Pitchwinkel. Es wird in der Figur 4 insbesondere ersichtlich, dass, je größer der Pitchwinkel ist, desto kleiner ist der Schubbeiwert.

Alternativ zur konventionellen Pitchkennlinie 206 ist in der Figur 3 die zweite Pitchkennlinie 208 dargestellt, die bis zu einem ersten Leistungsschwellwert 207 der elektrischen Leistung 200 im Wesentlichen mit einer ersten Pitchkennlinie 204 übereinstimmt. Für eine den ersten Leistungsschwellwert 207 überschreitende elektrische Leistung 200 ist der Pitchwinkel 202 der zweiten Pitchkennlinie 208 größer als der Pitchwinkel 202 der ersten Pitchkennlinie 204.

Die erste Pitchkennlinie 204 kann beispielsweise eine typische Pitchkennlinie sein, die jedenfalls ab dem Erreichen der Nennleistung ansteigende Pitchwinkel vorgibt. In anderen Fällen kann aber sowohl die erste Pitchkennlinie 204 als auch die zweite Pitchkennlinie 208 beispielsweise einen Anstieg des Pitchwinkels im Teillastbereich vorsehen. Beispielsweise kann ein linearer Anstieg bis zum Erreichen der Nennleistung und ein nichtlinearer Anstieg ab Erreichen der Nennleistung vorgesehen sein.

Die zweite Pitchkennlinie, mit der die erste Windenergieanlage 100a betrieben wird, resultiert im nachlaufbelasteten Nachlaufbetrieb der Windenergieanlage 100b dazu, dass im Teillastbereich unter dem ersten Leistungsschwellwert 207 eine hohe elektrische Leistung erzeugt werden kann, da hier die Schubwerte üblicherweise gering sind bzw. hier höhere Schubbeiwerte erlaubt sind. Bei einer elektrischen Leistung, und damit in der Regel auch einer entsprechenden Windgeschwindigkeit, die den ersten Leistungsschwellwert 207 überschreitet, wird der Pitchwinkel der zweiten Pitchkennlinie 208 erhöht, um die Schubbeiwerte zu reduzieren. Damit kann beispielsweise eine noch vorhandene Schubreserve, das heißt bis zu den maximal zulässigen Lasten, der sich im Nachlauf befindlichen Windenergieanlage 100b ausgenutzt werden, was wiederum den Ertrag der Windenergieanlage 100b erhöht.

Figur 4 zeigt schematische Verläufe von Schubbeiwerten. Auf der Abszisse ist die Windgeschwindigkeit 210 beispielsweise in Metern pro Sekunde aufgetragen. Auf der Ordinate ist der Schubbeiwert 212 aufgetragen. Der Verlauf des maximal zulässigen Schubbeiwerts 216 ist ebenfalls aufgetragen. Hier ist ersichtlich, dass bis zu einer gewissen Windgeschwindigkeit 210 der maximale Schubbeiwert 216 stets größer ist, als er sich für gewisse Pitchwerte einstellt. Das heißt, dass in diesem niedrigen Windgeschwindigkeitsbereich ein nahezu beliebiger Pitchwinkel eingestellt werden kann, unabhängig von einem maximal zulässigen Schubbeiwert, sodass der Fokus nahezu ausschließlich auf die Erzeugung einer maximalen elektrischen Leistung gelegt werden kann. Bei steigender Windgeschwindigkeit kann jedoch ein durch einen Pitchwinkel, der leistungsoptimal wäre, eingestellter Schubbeiwert den maximalen Schubbeiwert 216 überschreiten. In diesem Fall ist der Pitchwinkel entsprechend anzupassen, sodass der sich einstellende Schubbeiwert den maximalen Schubbeiwert im Wesentlichen nicht überschreitet.

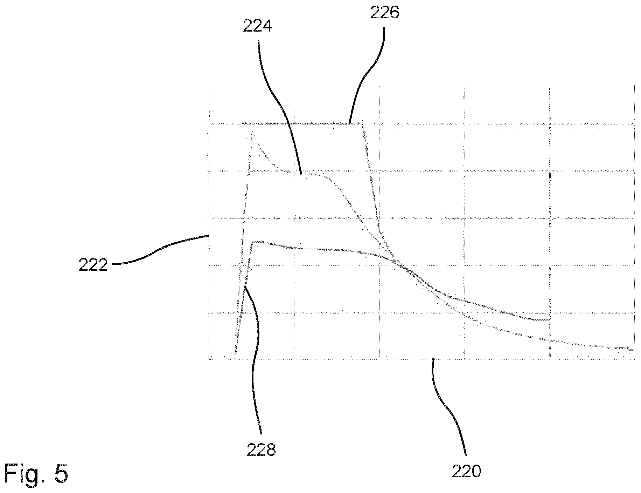

Figur 5 zeigt ausgewählte Verläufe von Schubbeiwerten aus Figur 4. Auf der Abszisse ist die Windgeschwindigkeit beispielsweise in Metern pro Sekunde und auf der Ordinate der Schubbeiwert 222 aufgetragen. Die Schubbeiwertkurve 228 repräsentiert den Schubbeiwert beispielhaft für einen Pitchwinkel, der der Pitchkennlinie 206 der Fig. 3 entspricht. Die Schubbeiwertkurve 224 für die zweite Pitchkennlinie 208 zeigt, dass stets ein höherer Schubbeiwert im Teillastbereich erreicht wird. Dies resultiert in der Regel in der Erzeugung einer höheren elektrischen Leistung. Die Schubbeiwertkurve 224 für die zweite Pitchkennlinie 208 ist gerade im Teillastbereich dichter an der Kurve des maximal zulässigen Schubbeiwerts 226.

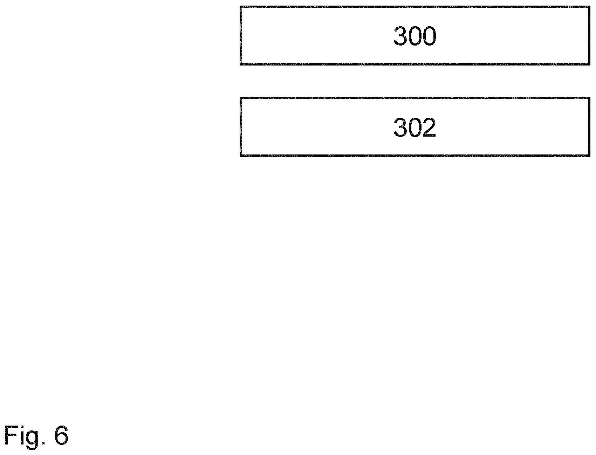

Figur 6 zeigt ein schematisches Verfahren. In Schritt 300 wird eine erste Windenergieanlage 100a und eine zweite Windenergieanlage 100b jeweils in einem nachlauffreien Normalbetrieb mit der ersten Pitchkennlinie 204 betrieben. Hier befindet sich also keine der Windenergieanlagen 100a, 100b in der Abschattung einer anderen Windenergieanlage. Insbesondere befindet sich die Windenergieanlage 100b im Wesentlichen nicht in einer Abschattung, also im Nachlauf der Windenergieanlage 100a. Wenn sich der Wind nun derart dreht, dass sich die Windenergieanlage 100b im Nachlauf der Windenergieanlage 100a befindet, wird in Schritt 302 die erste Windenergieanlage 100a in einem nachlaufbelasteten Nachlaufbetrieb mit einer zweiten Pitchkennlinie 208 betrieben.

In Schritt 302 wird also die erste Windenergieanlage 100a mit der zweiten Pitchkennlinie 208 betrieben. Die zweite Pitchkennlinie 208 repräsentiert einen zweiten Verlauf des Pitchwinkels in Abhängigkeit von der elektrischen Leistung, wobei die zweite Pitchkennlinie 208 vorzugsweise bis zu einem ersten Leistungsschwellwert 207 der elektrischen Leistung im Wesentlichen mit dem Verlauf der ersten Pitchkennlinie 204 übereinstimmt, jedoch bei Überschreiten des ersten Leistungsschwellwerts 207 der Pitchwinkel der zweiten Pitchkennlinie 208 größer ist als der Pitchwinkel der ersten Pitchkennlinie 204.

## BEZUGSZEICHEN

| 100a, 100b, 100c | Windenergieanlage |
|---|---|
| 102 | Turm |
| 104 | Gondel |
| 106 | Rotor |
| 108 | Rotorblätter |
| 110 | Spinner |
| 112 | Rotorblattlängsachse |
| 114 | Pitchwinkel |
| 116 | Pitchantrieb |
| 118 | Steuerungsvorrichtung |
| 200 | elektrische Leistung |
| 202 | Pitchwinkel |
| 204 | erste Pitchkennlinie |
| 206 | konventionelle Pitchkennlinie |
| 207 | erster Leistungsschwellwert |
| 208 | zweite Pitchkennlinie |
| 210 | Windgeschwindigkeit in m/s |
| 212 | Schubbeiwert |
| 214 | Schubbeiwertkurve für eine Vielzahl an Pitchwinkeln |
| 216 | maximal zulässiger Schubbeiwert |
| 220 | Windgeschwindigkeit in m/s |
| 222 | Schubbeiwert |
| 224 | Schubbeiwertkurve für zweite Pitchkennlinie 208 |
| 226 | maximal zulässiger Schubbeiwert |
| 228 | Schubbeiwertkurve für konventionelle Pitchkennlinie 206 |
| W | Windrichtung |

## Patentansprüche

1. Verfahren zum Betrieb einer ersten Windenergieanlage (100a) mit einem Rotor (106), der ein mit einem Pitchwinkel (114) einstellbares Rotorblatt (108) aufweist, die eine elektrische Leistung erzeugt und in deren Nachlauf sich bei wenigstens einer Nachlaufwindrichtung (W) eine zweite Windenergieanlage (100b) befindet, umfassend den Schritt:

   - Betreiben der ersten Windenergieanlage (100a) in einem im Wesentlichen nachlauffreien Normalbetrieb mit einer ersten Pitchkennlinie (204) und Betreiben der ersten Windenergieanlage (100a) in einem nachlaufbelasteten Nachlaufbetrieb mit einer zweiten Pitchkennlinie (208),
   - wobei die erste Pitchkennlinie (204) einen ersten Verlauf des Pitchwinkels (114) und die zweite Pitchkennlinie (208) einen zweiten Verlauf des Pitchwinkels (114) in Abhängigkeit der elektrischen Leistung repräsentiert,
   - wobei der Pitchwinkel (114) der zweiten Pitchkennlinie (208) für wenigstens einen Bereich der elektrischen Leistung größer ist als der Pitchwinkel (114) der ersten Pitchkennlinie (204), **dadurch gekennzeichnet, dass**

die erste Pitchkennlinie (204) und die zweite Pitchkennlinie (208) bis zu einem ersten Leistungsschwellwert (207) der elektrischen Leistung im Wesentlichen übereinstimmen, und für eine den ersten Leistungsschwellwert (207) überschreitende elektrische Leistung der Pitchwinkel (114) der zweiten Pitchkennlinie (208) größer ist als der Pitchwinkel (114) der ersten Pitchkennlinie (204).

2. Verfahren nach Anspruch 1, wobei für eine elektrische Leistung, die kleiner ist als der erste Leistungsschwellwert (207), der Pitchwinkel (114) der ersten Pitchkennlinie (204) und der Pitchwinkel (114) der zweiten Pitchkennlinie (208) im Wesentlichen gleich sind, und/oder wobei der Verlauf der ersten Pitchkennlinie (204) und/oder der Verlauf der zweiten Pitchkennlinie (208) bis zum Überschreiten des ersten Leistungsschwellwertes (207) im Wesentlichen keine Steigung aufweisen.

3. Verfahren nach einem der vorherigen Ansprüche, wobei die erste Windenergieanlage (100a) einen windgeschwindigkeitsabhängigen maximal zulässigen Schubbeiwert aufweist, wobei der Pitchwinkel (114) der zweiten Pitchkennlinie (208) einen derartigen Verlauf aufweist, dass ein an der ersten Windenergieanlage (100a) auftretender Schubbeiwert den maximal zulässigen Schubbeiwert im Wesentlichen nicht überschreitet.

4. Verfahren nach einem der vorherigen Ansprüche, wobei die erste Windenergieanlage (100a) eine windgeschwindigkeitsabhängige maximal zulässige Turbulenzintensität aufweist, wobei der Pitchwinkel (114) der zweiten Pitchkennlinie (208) einen derartigen Verlauf aufweist, dass eine an der ersten Windenergieanlage (100b) auftretende Turbulenzintensität die maximal zulässige Turbulenzintensität im Wesentlichen nicht überschreitet.

5. Verfahren nach einem der vorherigen Ansprüche, wobei für eine den ersten Leistungsschwellwert (207) überschreitende elektrische Leistung, die kleiner ist als ein zweiter Leistungsschwellwert, der Pitchwinkel (114) der ersten Pitchkennlinie (204) im Wesentlichen konstant ist und der Pitchwinkel (114) der zweiten Pitchkennlinie (208) ansteigt, vorzugsweise stetig ansteigt, besonders bevorzugt linear ansteigt.

6. Verfahren nach dem vorherigen Anspruch, wobei für eine den zweiten Leistungsschwellwert überschreitende elektrische Leistung die erste Pitchkennlinie (204) eine positive Steigung aufweist, die vorzugsweise geringer ist als die Steigung der zweiten Pitchkennlinie (208).

7. Verfahren nach einem der vorherigen Ansprüche, wobei für eine einen dritten Leistungsschwellwert, der größer ist als der erste Leistungsschwellwert (207), überschreitende elektrische Leistung der Pitchwinkel (114) der zweiten Pitchkennlinie (208) im Wesentlichen konstant ist, und vorzugsweise einen Wert zwischen 4°-8°, insbesondere zwischen 6°-7°, annimmt.

8. Verfahren nach einem der vorherigen Ansprüche, wobei der erste Leistungsschwellwert (207) zwischen 70 % bis 80 % der Nennleistung der ersten Windenergieanlage (100b) beträgt.

9. Steuerungsvorrichtung zum Betrieb einer ersten Windenergieanlage (100b) mit einem Rotor (106), der ein mit einem Pitchwinkel (114) einstellbares Rotorblatt (108) aufweist, die eine elektrische Leistung erzeugt und in deren Nachlauf sich bei wenigstens einer Nachlaufwindrichtung eine zweite Windenergieanlage befindet, wobei die Steuerungsvorrichtung eingerichtet ist,

   - die erste Windenergieanlage (100a) in einem im Wesentlichen nachlauffreien Normalbetrieb mit einer ersten Pitchkennlinie (204) und in einem nachlaufbelasteten Nachlaufbetrieb mit einer zweiten Pitchkennlinie (208) zu betreiben,
   - wobei die erste Pitchkennlinie (204) einen ersten Verlauf des Pitchwinkels (114) und die zweite Pitchkennlinie (208) einen zweiten Verlauf des Pitchwinkels (114) in Abhängigkeit der elektrischen Leistung repräsentiert,
   - wobei der Pitchwinkel (114) der zweiten Pitchkennlinie (208) für wenigstens einen Bereich der elektrischen Leistung größer ist als der Pitchwinkel (114) der ersten Pitchkennlinie (204), **dadurch gekennzeichnet, dass**

die erste Pitchkennlinie (204) und die zweite Pitchkennlinie (208) bis zu einem ersten Leistungsschwellwert (207) der elektrischen Leistung im Wesentlichen übereinstimmen, und für eine den ersten Leistungsschwellwert (207) überschreitende elektrische Leistung der Pitchwinkel (114) der zweiten Pitchkennlinie (208) größer ist als der Pitchwinkel (114) der ersten Pitchkennlinie (204).

10. Windpark mit einer ersten Windenergieanlage (100a) mit einem Rotor (106), der ein mit einem Pitchwinkel (114) einstellbares Rotorblatt (108) aufweist, die eine elektrische Leistung erzeugt und in deren Nachlauf sich bei wenigstens einer Nachlaufwindrichtung eine zweite Windenergieanlage befindet, wobei

- der Windpark zur Ausführung eines Verfahrens nach einem der Ansprüche 1-8 ausgebildet ist, und/oder
- eine Steuerungsvorrichtung nach Anspruch 9 umfasst.

**Claims**

1. Method for operating a first wind power installation (100a) comprising a rotor (106) having a rotor blade (108) that is adjustable with a pitch angle (114), which generates an electrical power and in the wake of which a second wind power installation (100b) is located in at least one wake wind direction (W), comprising the step of:

   - operating the first wind power installation (100a) in a substantially wake-free normal mode with a first pitch characteristic (204), and operating the first wind power installation (100a) in a wake-loaded wake mode with a second pitch characteristic (208),
   - wherein the first pitch characteristic (204) represents a first profile of the pitch angle (114) and the second pitch characteristic (208) represents a second profile of the pitch angle (114) as a function of the electrical power,
   - wherein the pitch angle (114) of the second pitch characteristic (208) is greater than the pitch angle (114) of the first pitch characteristic (204) for at least one range of the electrical power, **characterized by**

   the first pitch characteristic (204) and the second pitch characteristic (208) substantially matching up to a first power threshold value (207) of the electrical power and, for an electrical power exceeding the first power threshold value (207), the pitch angle (114) of the second pitch characteristic (208) being greater than the pitch angle (114) of the first pitch characteristic (204).

2. Method according to Claim 1, wherein, for an electrical power that is lower than the first power threshold value (207), the pitch angle (114) of the first pitch characteristic (204) and the pitch angle (114) of the second pitch characteristic (208) are substantially equal, and/or wherein the profile of the first pitch characteristic (204) and/or the profile of the second pitch characteristic (208) have substantially no slope until the first power threshold value (207) is exceeded.

3. Method according to any one of the preceding claims, wherein the first wind power installation (100a) has a wind-speed-dependent maximum permissible thrust coefficient, wherein the pitch angle (114) of the second pitch characteristic (208) has a profile such that a thrust coefficient occurring at the wind power installation (100a) substantially does not exceed the maximum permissible thrust coefficient.

4. Method according to any one of the preceding claims, wherein the first wind power installation (100a) has a wind-speed-dependent maximum permissible turbulence intensity, wherein the pitch angle (114) of the second pitch characteristic (208) has a profile such that a turbulence intensity occurring at the first wind power installation (100a) substantially does not exceed the maximum permissible turbulence intensity.

5. Method according to any one of the preceding claims, wherein, for an electrical power exceeding the first power threshold value (207), which is smaller than a second power threshold value, the pitch angle (114) of the first pitch characteristic (204) is substantially constant, and the pitch angle (114) of the second pitch characteristic (208) increases, preferably increases continuously, particularly preferably increases linearly.

6. Method according to the preceding claim, wherein, for an electrical power exceeding the second power threshold value, the first pitch characteristic (204) has a positive slope, which is preferably less than the slope of the second pitch characteristic (208).

7. Method according to any one of the preceding claims, wherein, for an electrical power exceeding a third power threshold value, which is greater than the first power threshold value (207), the pitch angle (114) of the second pitch characteristic (208) is substantially constant, and preferably assumes a value of between 4°-8°, in particular between 6°-7°.

8. Method according to any one of the preceding claims, wherein the first power threshold value (207) is between 70 % and 80 % of the rated power of the first wind power installation (100a).

9. Control device for operating a first wind power installation (100a) comprising a rotor (106) having a rotor blade (108) that is adjustable with a pitch angle (114), which generates an electrical power and in the wake of which a second wind power installation is located in at least one wake wind direction, wherein the control device is configured

   - to operate the first wind power installation (100a) in a substantially wake-free normal mode with a first pitch characteristic (204) and in a wake-loaded wake mode with a second pitch characteristic (208),
- wherein the first pitch characteristic (204) represents a first profile of the pitch angle (114) and the second pitch characteristic (208) represents a second profile of the pitch angle (114) as a function of the electrical power,
- wherein the pitch angle (114) of the second pitch characteristic (208) is greater than the pitch angle (114) of the first pitch characteristic (204) for at least one range of the electrical power **characterized by**

the first pitch characteristic (204) and the second pitch characteristic (208) substantially matching up to a first power threshold value (207) of the electrical power and, for an electrical power exceeding the first power threshold value (207), the pitch angle (114) of the second pitch characteristic (208) being greater than the pitch angle (114) of the first pitch characteristic (204).

**10.** Wind farm comprising a first wind power installation (100a) comprising a rotor (106) having a rotor blade (108) that is adjustable with a pitch angle (114), which generates an electrical power and in the wake of which a second wind power installation is located in at least one wake wind direction, wherein

- the wind farm is designed to execute a method according to any one of Claims 1-8, and/or
- comprises a control device according to Claim 9.

**Revendications**

**1.** Procédé de fonctionnement d'une première éolienne (100a) avec un rotor (106) qui présente une pale de rotor (108) réglable avec un angle de calage (114) qui génère une puissance électrique et dans le sillage de laquelle se situe une seconde éolienne (100b) pour au moins une direction du vent de sillage (W), comprenant l'étape suivante :

- le fonctionnement de la première éolienne (100a) dans un mode normal sensiblement sans sillage avec une première ligne caractéristique de calage (204) et le fonctionnement de la première éolienne (100a) dans un mode de sillage chargé en sillage avec une seconde ligne caractéristique de calage (208),
- dans lequel la première ligne caractéristique de calage (204) représente une première étendue de l'angle de calage (114) et la seconde ligne caractéristique de calage (208) représente une seconde étendue de l'angle de calage (114) en fonction de la puissance électrique,
- dans lequel l'angle de calage (114) de la seconde ligne caractéristique de calage (208) pour au moins une zone de la puissance électrique est supérieur à l'angle de calage (114) de la première ligne caractéristique de calage (204), **caractérisé en ce que**

la première ligne caractéristique de calage (204) et la seconde ligne caractéristique de calage (208) coïncident sensiblement jusqu'à une première valeur seuil de puissance (207) de la puissance électrique, et, pour une puissance électrique dépassant la première valeur seuil de puissance (207), l'angle de calage (114) de la seconde ligne caractéristique de calage (208) est supérieur à l'angle de calage (114) de la première ligne caractéristique de calage (204).

**2.** Procédé selon la revendication 1, dans lequel, pour une puissance électrique qui est inférieure à la première valeur seuil de puissance (207), l'angle de calage (114) de la première ligne caractéristique de calage (204) et l'angle de calage (114) de la seconde ligne caractéristique de calage (208) sont sensiblement identiques, et/ou dans lequel l'étendue de la première ligne caractéristique de calage (204) et/ou l'étendue de la seconde ligne caractéristique de calage (208) ne présentent sensiblement aucune pente jusqu'au dépassement de la première valeur seuil de puissance (207).

**3.** Procédé selon l'une quelconque des revendications précédentes, dans lequel la première éolienne (100a) présente un coefficient de poussée autorisé au maximum dépendant de la vitesse du vent, dans lequel l'angle de calage (114) de la seconde ligne caractéristique de calage (208) présente une étendue telle qu'un coefficient de poussée survenant au niveau de la première éolienne (100a) ne dépasse pas sensiblement le coefficient de poussée autorisé au maximum.

**4.** Procédé selon l'une quelconque des revendications précédentes, dans lequel la première éolienne (100a) présente une intensité de turbulence autorisée au maximum dépendant de la vitesse du vent, dans lequel l'angle de calage (114) de la seconde ligne caractéristique de calage (208) présente une étendue telle qu'une intensité de turbulence survenant au niveau de la première éolienne (100b) ne dépasse pas sensiblement l'intensité de turbulence autorisée au maximum.

**5.** Procédé selon l'une quelconque des revendications précédentes, dans lequel, pour une puissance électrique dépassant la première valeur seuil de puissance (207) qui est inférieure à une deuxième valeur seuil de puissance, l'angle de calage (114) de la première ligne caractéristique de calage (204) est sensiblement constant et l'angle de calage (114) de la seconde ligne caractéristique de calage (208) augmente, de préférence augmente en continu, de manière particulièrement préférée augmente linéairement.

6. Procédé selon la revendication précédente, dans lequel, pour une puissance électrique dépassant la deuxième valeur seuil de puissance, la première ligne caractéristique de calage (204) présente une pente positive qui est de préférence plus faible que la pente de la seconde ligne caractéristique de calage (208).

7. Procédé selon l'une quelconque des revendications précédentes, dans lequel, pour une puissance électrique dépassant une troisième valeur seuil de puissance qui est supérieure à la première valeur seuil de puissance (207), l'angle de calage (114) de la seconde ligne caractéristique de calage (208) est sensiblement constant, et de préférence adopte une valeur entre 4° et 8°, en particulier entre 6° et 7°.

8. Procédé selon l'une quelconque des revendications précédentes, dans lequel la première valeur seuil de puissance (207) est comprise entre 70 % et 80 % de la puissance nominale de la première éolienne (100b).

9. Dispositif de commande pour le fonctionnement d'une première éolienne (100b) avec un rotor (106) qui présente une pale de rotor (108) réglable avec un angle de calage (114) qui génère une puissance électrique et dans le sillage de laquelle se situe une seconde éolienne pour au moins une direction du vent de sillage, dans lequel le dispositif de commande est conçu afin de

- faire fonctionner la première éolienne (100a) dans un mode normal sensiblement sans sillage avec une première ligne caractéristique de calage (204) et dans un mode de sillage chargé en sillage avec une seconde ligne caractéristique de calage (208),
- dans lequel la première ligne caractéristique de calage (204) représente une première étendue de l'angle de calage (114) et la seconde ligne caractéristique de calage (208) représente une seconde étendue de l'angle de calage (114) en fonction de la puissance électrique,
- dans lequel l'angle de calage (114) de la seconde ligne caractéristique de calage (208) pour au moins une zone de la puissance électrique est supérieur à l'angle de calage (114) de la première ligne caractéristique de calage (204), **caractérisé en ce que**

la première ligne caractéristique de calage (204) et la seconde ligne caractéristique de calage (208) coïncident sensiblement jusqu'à une première valeur seuil de puissance (207) de la puissance électrique, et, pour une puissance électrique dépassant la première valeur seuil de puissance (207), l'angle de calage (114) de la seconde ligne caractéristique de calage (208) est supérieur à l'angle de calage (114) de la première ligne caractéristique de calage (204).

10. Parc éolien avec une première éolienne (100a) avec un rotor (106) qui présente une pale de rotor (108) réglable avec un angle de calage (114) qui génère une puissance électrique et dans le sillage de laquelle se situe une seconde éolienne pour au moins une direction du vent de sillage, dans lequel

- le parc éolien est réalisé pour l'exécution d'un procédé selon l'une quelconque des revendications 1 à 8, et/ou
- comprend un dispositif de commande selon la revendication 9.

**Fig. 1**

Fig. 2

Fig. 3

EP 3 926 162 B1

Fig. 4

Fig. 5

```
┌─────────────────────────────────┐
│                                 │
│              300                │
│                                 │
└─────────────────────────────────┘

┌─────────────────────────────────┐
│                                 │
│              302                │
│                                 │
└─────────────────────────────────┘
```

Fig. 6

**EP 3 926 162 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3754179 A1